# EUROPEAN PATENT APPLICATION

(11) **EP 4 534 883 A1**
(43) Date of publication of application: **09.04.2025**
(21) Application number: 23811227.0
(22) Date of filing: 24.05.2023
(51) Int. Cl.: F16L 33/00, F16L 33/22, F16L 19/02, F16L 47/04

(54) **CONNECTION SYSTEM FOR HOSES**

(30) Priority: 26.05.2022 ES 202230876 U
(71) Applicant: Caballero Leal, Arantzazu, 20003 Donostia Gipuzkoa (ES)
(72) Inventor: Caballero Leal, Arantzazu, 20003 Donostia Gipuzkoa (ES)
(74) Representative: González López-Menchero, Álvaro Luis
(86) International application number: PCT/ES2023/070334
(87) International publication number: WO 2023/227816

(57) **Abstract**

The present invention relates to a connection system for hoses that is made up of a linking part, a conduit, a part with male threading and a compression collar, as well as at least one drain hose.

The invention solves the drawback that exists when a washing machine hose must be connected to a coupling tube.

## Description

### OBJECT OF THE INVENTION

The invention, as the title of the present specification states, a connection system for hoses, is an innovation which, within the current state of the art, provides hitherto unknown advantages.

### TECHNICAL FIELD

The present invention falls within the field of general measures to ensure the proper functioning of machines or installations, focusing in particular on the field of fittings or other accessories for pipes.

### STATE OF THE ART

The present invention arises from the inefficiency of connecting a washing machine hose to a coupling tube.

That is because it is always necessary to buy a clamp, instead of the tube coming with the appropriate connection to secure the hose to this type of connection.

Furthermore, when the appropriate parts are not available for the installation of the tube with the hose, the hose ends up leaking and, in the worst case scenario, even coming out of the connection, generating a large water leakage.

In view of the above, it is interesting to note that the invention presents a coupling tube with a connection system for hoses, suitable for connecting and securing to the hose of a washing machine, without having to purchase additional parts to guarantee perfect wastewater disposal.

At present, no connection system for hoses is known to exist which has structural and constitutive technical features the are the same as or similar to those described in this specification, as claimed.

### DESCRIPTION OF THE INVENTION

The object of the present invention relates to the creation of a connection system for hoses that provides a notable innovation within its field of application in the current state of the art, with the characterising details that make it possible being suitably included in the final claims that accompany the present description.

The present invention relates to a connection system for hoses that is made up of a linking part, a conduit, a part with male threading and a compression collar, as well as at least one drain hose.

The invention solves the drawback that exists when a washing machine hose must be connected to a coupling tube.

This connection system is therefore suitable for ensuring the drainage of the washing machine without having to purchase additional parts for this purpose.

For this purpose, the connection system for hoses comprises a linking part which, by means of the compression exerted by a collar screwed to a part with male threading, ensures the perfect connection of the hose to said linking part.

For installation, the user only has to fit the hose to the appropriate end of the linking part, and screw the collar to the part with male threading, which, with the help of an O-ring inside same, ensures a correct connection and sealing for wastewater disposal.

It is for this reason that the connection system for hoses presents an innovation of hitherto unknown features for the purpose for which it is intended, which reasons, together with its practical utility, provide sufficient grounds to obtain the exclusive privilege requested.

### DESCRIPTION OF THE FIGURES

To complete the description provided herein, and for the purpose of helping to make the features of the invention more readily understandable, this description is accompanied by a figure constituting an integral part of the same, which by way of illustration and not limitation represents the following:

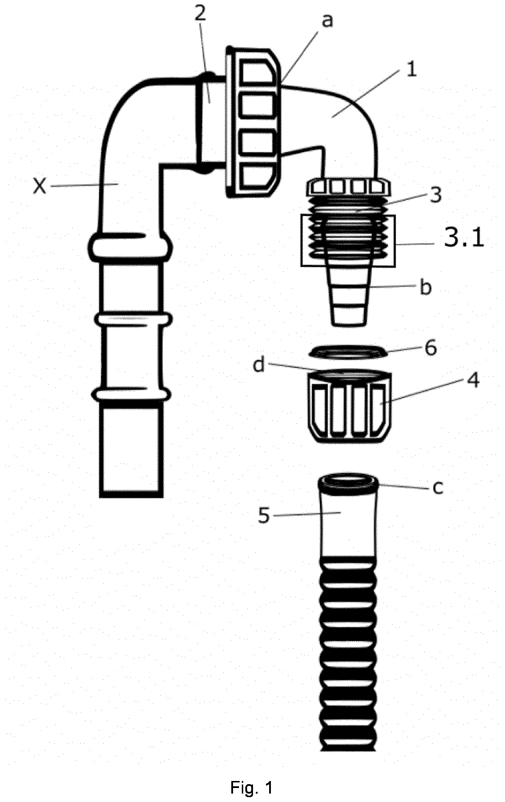

Figure 1 corresponds to a perspective view of a connection system for hoses.

### PREFERRED EMBODIMENT OF THE INVENTION

The object of the present invention relates to a connection system for hoses that provides a notable innovation within its field of application, with the characterising details that make it possible being suitably included in the claims.

The connection system for hoses has a linking part (1), a conduit (2), a part with male threading (3), a compression collar (4), at least one drain hose (5).

In a preferred embodiment, the linking part (1) has a wide end (a) suitable for coupling to a conduit (2) which in turn is connected to a wastewater disposal system (X).

Preferably, the linking part (1) has a reducing end (b) with a diameter suitable for fitting to a drain hose (5) connected to a household appliance.

According to the preferred embodiment, the part with male threading (3) has an O-ring (6) which is coupled to the inside of said part with male threading (3), wherein said O-ring (6) is suitable for being coupled to the mouth (c) of the drain hose (5) fitted in the reducing end (b).

In a preferred embodiment, the compression collar (4) has a female threading (d) which is screwed on the part with male threading (3), capable of causing the compression that secures the drain hose (5) to the reducing end (b), determining the attachment point and/or connection coupling of the drain hose (5) of a household appliance, suitable to be installed in a wastewater disposal system (X).

Preferably, the drain hose (5) is one of those connected to household appliances such as washing machines, dishwashers and/or tumble dryers.

Generally, the linking part (1) can have two reducing ends (b) with diameters suitable for fitting to two drain hoses (5).

The linking part (1) has an end with male threading (3) compatible with a part with female threading (3.1) which further has an outer threading compatible with the drain hose (5), being coupled to same by means of a compression collar (4).

Having sufficiently described the nature of the present invention, as well as the ways of implementing it, it is not considered necessary to extend its explanation for any person skilled in the state of the art to understand its scope and the advantages which derive from it, specifying that, within its essential nature, it can be carried out in other embodiments that differ in detail from the one provided by way of example, and which are also covered by the requested protection, provided that they do not alter, change or modify its fundamental principle.

## Claims

1. A connection system for hoses, **characterised in that** it comprises a linking part (1), a conduit (2), a part with male threading (3), a compression collar (4) and at least one drain hose (5).

2. The connection system for hoses according to claim 1, **characterised in that** the linking part (1) has a wide end (a) suitable for coupling to a conduit (2) which in turn is connected to a wastewater disposal system (X).

3. The connection system for hoses according to claim 1, **characterised in that** the linking part (1) has a reducing end (b) with a diameter suitable for fitting to a drain hose (5) connected to a household appliance.

4. The connection system for hoses according to the preceding claims, **characterised in that** the part with male threading (3) has an O-ring (6) which is coupled to the inside of said part with male threading (3), wherein said O-ring (6) is suitable for being coupled to the mouth (c) of the drain hose (5) fitted in the reducing end (b).

5. The connection system for hoses according to claim 1, **characterised in that** the compression collar (4) has a female threading (d) which is screwed on the part with male threading (3).

6. The connection system for hoses according to claims 1, 2 and 3, **characterised in that** the linking part (1) has two reducing ends (b) with diameters suitable for fitting to two drain hoses (5).

7. The connection system for hoses, according to claim 1, **characterised in that** the linking part (1) has an end with male threading (3) compatible with a part with female threading (3.1) which further has an outer threading compatible with the drain hose (5), being coupled to same by means of a compression collar (4).
